(19) Europäisches Patentamt / European Patent Office / Office européen des brevets

(11) **EP 3 153 543 B1**

(12) **EUROPEAN PATENT SPECIFICATION**

(45) Date of publication and mention
of the grant of the patent:
**13.09.2023  Bulletin 2023/37**

(21) Application number: **16192385.9**

(22) Date of filing: **05.10.2016**

(51) International Patent Classification (IPC):
**C08J 7/02** $^{(2006.01)}$    **C08J 11/08** $^{(2006.01)}$

(52) Cooperative Patent Classification (CPC):
**C08J 7/02; C08J 11/08;** C08J 2300/24;
C08J 2363/00; Y02W 30/62

(54) **METHOD AND COMPOSITION FOR SWELLING PRETREATMENT BEFORE DECOMPOSITION OF CURED THERMOSETTING RESIN MATERIALS**

VERFAHREN UND ZUSAMMENSETZUNG FÜR AUFQUELLENDE VORBEHANDLUNG VOR DER ZERSETZUNG VON GEHÄRTETEN WÄRMEHÄRTENDEN HARZMATERIALIEN

PROCÉDÉ ET COMPOSITION DE PRÉTRAITEMENT D'EXPANSION AVANT DÉCOMPOSITION DE RÉSINES THERMODURCISSABLES DURCIES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.10.2015   KR 20150140571
18.03.2016   KR 20160033006**

(43) Date of publication of application:
**12.04.2017   Bulletin 2017/15**

(73) Proprietor: **Korea Institute of Science and Technology**
**Seoul 02792 (KR)**

(72) Inventors:
• **GOH, Munju**
  **55324 Jeollabuk-do (KR)**
• **YU, Jin Won**
  **55324 Jeollabuk-do (KR)**
• **JUNG, Jin**
  **55324 Jeollabuk-do (KR)**
• **YOUN, Sang Jun**
  **55324 Jeollabuk-do (KR)**
• **KU, Bon-Cheol**
  **55324 Jeollabuk-do (KR)**
• **YOU, Nam Ho**
  **55324 Jeollabuk-do (KR)**
• **YEO, Hyeonuk**
  **55324 Jeollabuk-do (KR)**

(74) Representative: **advotec.**
  **Patent- und Rechtsanwaltspartnerschaft**
  **Tappe mbB**
  **Widenmayerstraße 4**
  **80538 München (DE)**

(56) References cited:
EP-A2- 0 872 536        WO-A1-2007/028446
WO-A1-2015/169801      GB-A- 1 384 113
JP-A- 2001 334 530      US-B1- 6 962 628

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND**

**1. Field**

The present disclosure relates to a method and a use of a composition for swelling pretreatment before decomposition of cured thermosetting resin materials. In particular, the present disclosure relates to a method and a use of a composition for swelling pretreatment before decomposition of cured thermosetting resin materials, specifically cured epoxy resin materials, wherein their decomposition rate may be increased by the swelling pretreatment before the decomposition.

**2. Description of the Related Art**

Plastics may be classified into thermoplastic resins and thermosetting resins. Among those, thermosetting resins are used widely for composite materials, such as carbon fiber reinforced plastic (CFRP) using carbon fibers as filler materials. Since composite materials, such as CFPR, have been increasingly in use in various industrial fields, such as cars, space avitation and new energy, a need for recycling such composite materials is also increasing.

However, a thermosetting resin, once cured, is sparingly soluble in a solvent unless it is heated. Thus, it is difficult to recycle a thermosetting resin. Typical examples of thermosetting resins include polyurethane, epoxy resins.

An epoxy resin is a thermosetting resin including a network polymer formed by ring-opening of epoxy groups generated when mixing an epoxy monomer having two or more epoxy groups in its molecule with a curing agent. Such an epoxy resin has excellent chemical resistance and durability, shows a low volumetric shrinkage upon curing, and thus may be used as highly functional raw materials which are essential for various industrial fields, including adhesives, paints, electronic/electric industry, civil engineering/architectural industry.

An epoxy resin as a thermosetting resin, once cured, forms a three-dimensional crosslinked network structure, which has strong resistance against chemicals. Thus, such an epoxy resin advantageously imparts materials with high durability and anticorrosive property, but undesirably has a difficulty in treating and reutilizing the materials after use.

Most cured epoxy resin materials have been treated by reclamation. This is significant waste in terms of cost and may cause severe environmental pollution.

To address this, a pyrolysis is generally used for decomposing a composite material and for separating filler materials used together, such as carbon fibers. For example, in case of carbon fiber reinforced plastics (CFRP) using carbon fibers as fillers, Japanese companies, such as Toray, Teijin and Mitsubishi, have been taking the lead in treatment and recycle of CFRP based on pyrolysis in an amount of 1000 tons per year.

However, such a pyrolysis process requires a high temperature of 500°C or higher where organic compounds produce materials, such as dioxin, harmful to the human body due to combustion thereof.

Therefore, various chemical decomposition processes have been studied to decompose an epoxy resin efficiently at a lower temperature. Such methods include methods for depolymerization using, for example, supercritical or subcritical fluid, or a specific oxidizing agent and an organic solvent.

However, according to the researches by the inventors of the present disclosure, such methods for depolymerization of the thermosetting resin, such as cured epoxy resin materials, requires a lot of time while yielding low depolymerization efficiency, and thus an improvement of the processing efficiency is required.

For this, a pretreatment process including crushing a thermosetting resin composite material, such as CFRP, mechanically in advance may be used for separating carbon fibers before depolymerization. However, when CFRP is crushed to a size of several millimeters, the carbon fibers may also be crushed and to this end the carbon fibers to be recycled may have a decreased length, which in turn may adversely affect the properties of the carbon fibers.

In addition, methods for pretreatment of a thermosetting resin, such as epoxy resin, with an acidic material may be considered for use before depolymerization. However, even though such pretreatment using an acidic material is used, the depolymerization rate is still insufficient and requires to be improved.

WO 2015/169801 A1 describes a method for recycling of a packaging material. This method comprises placing waste in a vat comprising a separation fluid to produce a mixture of metal shreds from a metal layer, plastic shreds from a polymer layer and residual components. The separation fluid comprises a mixture comprising at least one swelling agent and at least one carboxylic acid.

US 6 962 628 D1 relates to a method of treating an epoxy resin-cured product with a treating liquid comprising a decomposition catalyst, an organic solvent, an acidic material, such as acetic acid or butyric acid, and optionally a surfactant. The cured epoxy resin is swollen by the treating liquid.

## SUMMARY

The present disclosure is directed to providing a use of a composition and a method for swelling pretreatment before decomposition of a cured thermosetting resin material wherein the composition and method is capable to increasing a decomposition rate (decomposition speed) during the decomposition of the cured thermosetting resin material, particularly a cured epoxy resin material, for example, by at least 10%, specifically at least 20%, and further specifically at least 50% or at least 100%, so that the decomposition time and cost and energy requirement may be reduced, and degradation of properties of fillers that may occur during the decomposition may be decreased.

According to the invention, there is provided a use of a composition for swelling pretreatment before decomposition of a cured thermosetting resin material, comprising a surfactant and an acidic material.

According to example embodiments, the surfactant is capable of accelerating infiltration of the acidic material into the cured thermosetting resin material and swelling of the cured thermosetting resin material.

According to example embodiments, the composition is capable of increasing a decomposition reactive surface area of the cured thermosetting resin material before its decomposition.

According to example embodiments, the composition is capable of increasing a decomposition ratio.

According to example embodiments, the cured thermosetting resin material is a cured epoxy resin material.

According to the invention, the surfactant is at least one selected from the group consisting of anionic surfactant, cationic surfactant, amphoteric surfactant, nonionic surfactant and special surfactant.

According to example embodiments, the anionic surfactant comprises at least one selected from the group consisting of fatty acid salt, sulfate, sulfonate and phosphate.

According to example embodiments, the cationic surfactant comprises at least one selected from the group consisting of amine salt, ammonium salt and pyridinium salt.

According to example embodiments, the amphoteric surfactant comprises at least one selected from the group consisting of amino acid salt, betaine-based compound and natural surfactant.

According to example embodiments, the nonionic surfactant comprises at least one selected from the group consisting of polyhydric alcohol-based compound, adduct of polyhydric alkyl phenol with ethylene oxide, fatty acid ester-based compound, adduct of polyhydric alcohol with ethylene oxide and adduct of polyhydric alcohol with propylene oxide.

According to example embodiments, the special surfactant comprises at least one selected from the group consisting of fluoro-compound, silicon compound, polyacrylamide polymer and polymethacrylate polymer.

According to example embodiments, the acidic material is at least one selected from the group consisting of acetic acid, propionic acid and butyric acid.

According to example embodiments, the surfactant is used in an amount of 1-99 wt% based on the total weight of the pretreatment composition.

According to example embodiments, the composition has a pH of 1 or higher and less than 7.

According to example embodiments, the decomposition is pyrolysis or depolymerization.

According to example embodiments, there is provided a cured thermosetting resin material to be decomposed, which is swelled with the above said composition for swelling pretreatment.

According to the invention, there is provided a method for swelling pretreatment before decomposition of a cured thermosetting resin material, comprising carrying out swelling of the cured thermosetting resin material by using the above said composition for swelling pretreatment.

According to example embodiments, the method comprises dipping the cured thermosetting resin material in the composition for swelling pretreatment, before the cured thermosetting resin material is decomposed, thereby increasing a decomposition reactive surface area.

According to the invention, the method comprises dipping the cured thermosetting resin material in the composition for swelling pretreatment, before the cured thermosetting resin material is decomposed, thereby accelerating infiltration of the acidic material and swelling of the cured thermosetting resin material.

According to example embodiments, the pretreatment is carried out at a temperature of 20-250°C.

According to example embodiments, the cured thermosetting resin material is used in an amount of 1-99 parts by weight based on 100 parts by weight of the total composition for swelling pretreatment.

According to example embodiments, the method comprises adding a composition for swelling pretreatment remaining after dipping and separating the cured thermosetting resin material to swelling pretreatment of a new cured thermosetting resin material, so as that the composition is recycled.

According to example embodiments, the method further comprises carrying out physical crushing in combination with the swelling pretreatment.

According to example embodiments, the physical crushing is at least one selected from dry crushing and wet crushing.

According to example embodiments, the decomposition is pyrolysis or depolymerization.

According to embodiments of the present disclosure, it is possible to increase a decomposition rate (decomposition speed) during the decomposition, such as pyrolysis or depolymerization, of a cured thermosetting resin material, particularly a cured epoxy resin material, for example, by at least 10%, specifically at least 20%, and more specifically at least 50% or at least 100%, and thus to reduce the decomposition time and cost and energy requirement, and to decrease degradation of properties of fillers that may occur during the decomposition.

## BRIEF DESCRIPTION OF THE DRAWINGS

The above and other aspects, features and advantages of the disclosed example embodiments will be more apparent from the following detailed description taken in conjunction with the accompanying drawings in which:

FIG. 1A is a photograph illustrating a CFRP before pretreatment in Example 1.
FIG. 1B is a photograph illustrating a CFRP after pretreatment in Example 1.
FIG. 2 shows results of measurement of pH for the composition for pretreatment in Example 1.
FIG. 3 is a graph illustrating results of the depolymerization ratio after 24 hours as a function of the amount of surfactant in each of the compositions for swelling pretreatment obtained from Examples 1-3 and Comparative Example 1. In FIG. 3, X axis represents an amount of sodium dodecyl sulfate (SDS) (unit: wt%) and Y axis represents a depolymerization ratio (unit: %).
FIG. 4 shows results of FT-IR analysis for CFRP in Examples 1-3 and CFRP before pretreatment (V-CFRP). In FIG. 4, X axis represents a wave number (unit: $cm^{-1}$) and Y axis represents intensity (unit: arbitrary unit).
FIG. 5 is a graph illustrating the intensity at a wave number of 1729 $cm^{-1}$ representing C=O bonds in the analysis results of FIG. 4 as a function of amount of surfactant. In FIG. 5, X axis represents an amount of SDS (unit: wt%) and Y axis represents intensity at a wave number of 1729 $cm^{-1}$ (unit: arbitrary unit). In FIG. 5, the amount of SDS of 0 corresponds to CFRP before pretreatment (V-CFRP).
FIG. 6 is a thermogravimetric analysis (TGA) graph before and after the pyrolysis in Example 8 and Comparative Example 3. In FIG. 6, X axis represents a temperature (°C) and Y axis represents a weight (unit: %).
FIG. 7A shows a photograph of Example 1 before pretreatment.
FIG. 7B shows a photograph of Example 1 after pretreatment.
FIG. 7C shows a photograph of Example 1 after decomposition.
FIG. 8 is a thermogravimetric analysis (TGA) graph of Example 1 before pretreatment, after pretreatment and after decomposition. In FIG. 8, X axis represents a temperature (°C) and Y axis represents a weight (unit: %).
FIG. 9 is a graph illustrating the results of the pyrolysis rate after 24 hours as a function of the amount of surfactant in each of the compositions for swelling pretreatment obtained from Examples 8-10 and Comparative Example 3. In FIG. 9, X axis represents an amount of BTAB (unit: wt%) and Y axis represents a pyrolysis ratio (unit: %).

## DETAILED DESCRIPTION

Example embodiments are described more fully hereinafter. The invention may, however, be embodied in many different forms and should not be construed as limited to the example embodiments set forth herein. Rather, these example embodiments are provided so that this disclosure will be thorough and complete, and will fully convey the scope of the invention to those skilled in the art. In the description, details of features and techniques may be omitted to more clearly disclose example embodiments.

The terminology used herein is for the purpose of describing particular embodiments only and is not intended to be limiting of the invention. As used herein, the singular forms "a," "an" and "the" are intended to include the plural forms as well, unless the context clearly indicates otherwise. Furthermore, the use of the terms a, an, etc. do not denote a limitation of quantity, but rather denote the presence of at least one of the referenced item. The terms "first," "second," and the like do not imply any particular order, but are included to identify individual elements. Moreover, the use of the terms first, second, etc. do not denote any order or importance, but rather the terms first, second, etc. are used to distinguished one element from another.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein. All methods described herein can be performed in a suitable order unless otherwise indicated herein or otherwise clearly contradicted by context. The use of any and all examples, or exemplary language (e.g., "such as"), is intended merely to better illustrate the invention and does not pose a limitation on the scope of the invention unless otherwise claimed. No language in the specification should be construed as indicating any non-claimed element as essential to the practice of the invention as used herein.

Definition of Terms

In the present disclosure, the meaning of 'decomposition' includes depolymerization, pyrolysis.

In the present disclosure, 'depolymerization' means a decomposition of a cured thermosetting resin material by cleaving chemical bonds in the polymer structure of the cured thermosetting resin material.

In the present disclosure, 'swelling pretreatment' means swelling of a cured thermosetting resin material before decomposition for the purpose of facilitating the decomposition.

In the present disclosure, 'swelling' means that a cured thermosetting resin material absorbs a solvent and its volume is increased accordingly. For example, this may mean increasing of distances between materials, such as filler materials or polymer resins, in a cured thermosetting resin material (composite) which is stacked and compressed in multiple layers, thereby increasing the area to be in contact with heat or facilitating infiltration of a solution for decomposition (e.g. composition for depolymerization) during the subsequent decomposition process, such as pyrolysis or depolymerization.

In the present disclosure, 'a cured thermosetting resin material to be decomposed after it is subjected to swelling pretreatment' means a cured thermosetting resin material after it is subjected to swelling pretreatment and before it is decomposed, and thus that means a cured thermosetting resin material swelled through swelling pretreatment.

In the present disclosure, 'cured thermosetting resin material' means a cured thermosetting resin or various composite materials including a cured thermosetting resin. Similarly, the term 'cured epoxy resin material' means an epoxy resin or various composite materials including an epoxy resin. In addition, 'cured thermosetting resin material' is also defined to include not only a fully cured thermosetting resin but also a partially cured thermosetting resin or an intermediate produced during the curing (i.e., prepolymer or prepreg). The composite materials may include various fillers and/or various polymer resins in addition to a thermosetting resin.

In the present disclosure, an epoxy resin may be produced through a curing reaction between an epoxy compound having two or more epoxy groups in its molecule and a curing agent. There is no particular limitation in epoxy compound and curing agent. The epoxy compound may include a multifunctional epoxy compound, or the like. In addition, the curing agent may include a curing agent having an aromatic group or aliphatic group and may also include a curing agent having at least one selected from the group consisting of an amine group, acid anhydride group, imidazole group and mercaptan group in its molecule structure.

In the present disclosure, 'filler' means a filled material forming a thermosetting resin composite material (e.g. CFRP) together with a thermosetting resin.

In the present disclosure, 'acidic material' means a material having a pH less than 7 when it is dissolved in water.

In the present disclosure, 'decomposition completion time' means a time required for full decomposition of a cured thermosetting resin material provided for the decomposition. Herein, 'full decomposition' means that residual cured thermosetting resin (solid) is not present substantially (i.e., residue ratio of the thermosetting resin is 5% or less). Herein, a residue ratio may be calculated from the ratio of the weight peak appearing in a temperature range of 300-450°C on the results of thermogravimetric analysis. For example, '5% or less' means that the ratio of the weight peak appearing in a temperature range of 300-450°C on the results of thermogravimetric analysis is 5% or less. Otherwise, a residue ratio may also be calculated as follows. That is, decomposition ratio (%) = [(thermosetting resin content in cured thermosetting resin material - thermosetting resin residue after decomposition) / (thermosetting resin content in cured thermosetting resin material)] x 100. Then, the residue ratio of thermosetting resin is 100% - the decomposition ratio.

In the present disclosure, 'decomposition ratio increases' means that the decomposition completion time is reduced when carrying out swelling pretreatment, as compared to the decomposition completion time without carrying out swelling pretreatment under the same decomposition conditions.

In the present disclosure, 'decomposition reactive surface area increases' means that a surface area of a cured thermosetting resin material to be decomposed increases when carrying out swelling pretreatment, as compared to a surface area without carrying out swelling pretreatment under the same decomposition conditions.

For example, in case of pyrolysis, 'decomposition reactive surface area increases' means that an area to be in contact with heat increases when carrying out swelling pretreatment, as compared to an area to be in contact with heat without carrying out swelling pretreatment under the same pyrolysis conditions, and accordingly a surface area of a cured thermosetting resin material for pyrolysis increases.

In addition, in case of depolymerization, 'decomposition reactive surface area increases' means that a reactive area of a cured thermosetting resin material to be depolymerized increases when carrying out swelling pretreatment, as compared to a reactive area to be depolymerized without carrying out swelling pretreatment under the same depolymerization conditions.

Description of Example Embodiments

Hereinafter, example embodiments of the present disclosure will be described in detail.

In one aspect, there is provided a use of a composition for swelling pretreatment before decomposition of a cured thermosetting resin material, in particular a cured epoxy resin material, wherein the composition includes a surfactant and an acidic material.

If carrying out swelling pretreatment by using the composition for swelling pretreatment before decomposing a cured thermosetting resin material, particularly cured epoxy resin material, it is possible to increase a decomposition ratio by at least 10%, specifically at least 20%, and more specifically at least 50% or at least 100%.

Particularly, the swelling pretreatment composition includes an acidic material in combination with a surfactant. Accordingly, it is possible for the acidic material to infiltrate easily into a cured thermosetting resin material, particularly a cured epoxy resin material. As a result, it is possible that chemical bonding, such as covalent bonding, ionic bonding or hydrogen bonding etc., may be produced between the acidic material and the cured material in the cured thermosetting resin material, particularly cured epoxy resin material, and the cured thermosetting resin material may be swelled, thereby increasing the heat contact area in case of pyrolysis or increasing depolymerization reactive surface area in case of depolymerization.

It is thought that since chemical bonding, such as covalent bonding, ionic bonding or hydrogen bonding, etc., are formed between the cured thermosetting resin material and the acidic material as described above, the acidic material may be positioned in the interstices of the cured thermosetting resin material, which in turn may change a physical structure of the cured thermosetting resin material in a molecular scale, thereby causing swelling.

When the heat contact area or the depolymerization reactive surface area is increased by swelling as described above, the reaction efficiency of pyrolysis or depolymerization during the subsequent decomposition is increased, so that the time required for decomposition may be reduced and the decomposition ratio (decomposition speed, i.e., decomposition ratio for the given same time) may be increased. Therefore, it is possible to reduce the time required to decompose a cured thermosetting resin material, such as waste cured epoxy resin material (time required for decomposition of the same amount) to, for example, 10% or less, particularly 50% or less, and more particularly 100% or less, as compared to the related art.

For reference, when the cured thermosetting resin material is CFRP, a cured epoxy resin material, its decomposition ratio may be calculated as follows.

$$\text{Decomposition ratio} = [(\text{epoxy content in CFRP} - \text{epoxy residue after depolymerization}) / \text{epoxy content in CFRP}] \times 100$$

The surfactant is at least one selected from the group consisting of anionic surfactants, cationic surfactants, amphoteric surfactants, nonionic surfactants and special surfactants.

In general, surfactants have a property of dissociating anions or cations in water, or have a functional group, such as highly hydrophilic hydroxyl group, even if it is not ionized.

The former may be classified into an anionic, cationic or amphoteric (both anionic and cationic) surfactants, while the latter may be classified into nonionic surfactants. In addition to these, fluorine or polysiloxane etc. does not have the above two types of properties but serves as a surfactant as well and thus is referred to as special surfactant. This classification of surfactants is well known in the art.

In example embodiments, cationic surfactants or anionic surfactants are particularly suitable, and cationic surfactants are more preferable (see the following Table 1). Since anionic surfactants or cationic surfactants (particularly, cationic surfactants) have a relatively small molecular size as compared to the other surfactants, and thus may infiltrate a cured thermosetting resin material with ease. For example, in case of cocobetaine which is an amphoteric surfactant, it has a longer molecular structure as compared to sodium dodecyl sulfate (SDS) which is an anionic surfactant. In case of benzyl trimethyl ammonium bromide (BTAB) which is a cationic surfactant, it includes a benzyl group and methyl group, and thus has a relatively small molecular size. On the contrary, Brij 30 which is a nonionic surfactant or FC 4430 which is a special surfactant is a surfactant in the form of polymer, and thus has a relatively large molecular size.

In non-limiting examples, the anionic surfactant may include, for example, at least one selected from the group consisting of fatty acid salts, sulfates, sulfonates and phosphates. For example, sulfates may include monoalkylsulfates, alkyl polyoxyethylene sulfates, or the like, sulfonates may include alkylbenzene sulfonates or the like, and phosphates may include monoalkylphosphates.

In non-limiting examples, the cationic surfactant may include, for example, at least one selected from the group consisting of amine salts, ammonium salts and pyridinium salts. For example, amine salts may include octylamine acetates, decylamine acetates, dodecylamine acetates, ammonium salts may include dialkyldimethyl ammonium salts, alkylbenzylmethyl ammonium salts, and pyridinium salts may include alkylpyridinium chlorates, alkylpyridinium chlorides.

In non-limiting examples, the amphoteric surfactant may include, for example, at least one selected from the group consisting of amino acid salts, betaine-based compounds and natural surfactants. Amino acid salts may include N-acrylamino acid salts, alkylamino acid salts, betaine-based compounds may include alkylsulfobetaine, alkylcarboxybetaine, and natural surfactants may include cocobetaine, lecithin, solubilizers (e.g. Polysorbate 80, polyglyceryl-4-caprate, etc.).

In non-limiting examples, the nonionic surfactant may include, for example, at least one selected from the group consisting of polyhydric alcohol-based compounds, adducts of polyhydric alkyl phenol with ethylene oxide, fatty acid ester-based compounds, adducts of polyhydric alcohol with ethylene oxide and adducts of polyhydric alcohol with propylene oxide. Specifically, nonionic surfactants may include, for example, polyoxyethylenealkyl ether, fatty acid sorbitan ester, fatty acid diethanolamine, alkyl monoglyceryl ether.

In non-limiting examples, the special surfactant may include, for example, at least one selected from the group consisting of fluoro-compounds, such as fluoroalkyl ethers or fluoroalkyl sulfates, silicon compounds, such as polydimethylsiloxane salts, and polymethacrylate polymers, such as polyacrylamide polymers or polystearyl methacrylate.

In non-limiting examples, the acidic material may include acetic acid, propionic acid, butyric acid.

In non-limiting examples, the pretreatment composition (or the acidic material) may have a pH of 1 or higher and less than 7, preferably 1-6.

In non-limiting examples, the pretreatment composition may be in a liquid phase or supercritical phase. Use of a liquid phase may make the process simple and require a low energy consumption. Thus, a liquid phase may be used in the example embodiments but it should be understand that a supercritical phase may also be used intentionally. When using a pretreatment composition in a supercritical phase, the processing time may be reduced further, but the reaction system may be undesirably complicated.

In another aspect, there is also provided a method for swelling pretreatment of a cured thermosetting resin material, particularly cured epoxy resin material, by using the above-described pretreatment composition.

The method includes dipping a cured thermosetting resin material in a composition for swelling pretreatment including a surfactant and an acidic material, before the cured thermosetting resin material is depolymerized to accelerate infiltration of the acidic material and swelling effect.

In non-limiting examples, the swelling pretreatment may include dipping the cured thermosetting resin material in the pretreatment composition, followed by heating.

In non-limiting examples, the pretreatment composition may have a temperature of 20-250°C or 20-120°C (pretreatment temperature). The time from dipping the cured thermosetting resin material into the pretreatment composition to separating the cured thermosetting resin material from the pretreatment composition may be 0.1-24 hours. Then, the separated cured thermosetting resin material is washed. During such pretreatment, no depolymerization occurs and the cured thermosetting resin material is swelled.

In non-limiting examples, the surfactant may be used in an amount of 1-99 wt% based on the total weight of the pretreatment composition (surfactant + acidic material). In addition, the acidic material may also be used in an amount of 1-99 wt% based on the total weight of the pretreatment composition.

As can be seen from the following Table 1, in view of an increase in decomposition ratio, the surfactant may preferably be used in an amount of at least 5 wt%, or at least 9 wt%, or at least 14 wt%, or more preferably at least 18 wt% based on the total weight of the composition (surfactant + acidic material). When the surfactant is used in an amount up to 20 wt%, decomposition may almost be completed, and thus it may be used in an amount of 20 wt% or less.

In non-limiting examples, the cured thermosetting resin material, particularly cured epoxy resin material may be used in an amount of 1-99 parts by weight based on 100 parts by weight of the pretreatment composition (surfactant + acidic material).

In an example embodiment, after carrying out pretreatment of the cured thermosetting resin material, the remaining pretreatment composition may be reused for pretreatment of a new cured thermosetting resin material.

In an example embodiment, a physical crushing treatment may be carried out in combination with the swelling pretreatment. That is, for example, physical crushing may be carried out before/after/during the swelling pretreatment. Such physical crushing may be, for example, at least one selected from dry crushing and wet crushing.

In an example embodiment, decomposition after the pretreatment may be carried out in various ways with no particular limitation. For example, various pyrolysis or depolymerization processes may be used.

In still another aspect, there is provided a cured thermosetting resin material to be decomposed, wherein the material has been swelled through the above-described pretreatment. After the pretreatment, the cured thermosetting resin material (e.g. CFRP) may have C=O bonding in its polymer structure, for example, when acetic acid is used. As described hereinafter, use of a surfactant may further increase C=O bonding, which means that use of surfactant enhances infiltration of the acidic material to increase the decomposition reactive surface area.

As described in Experiment 2 below, even though such a surfactant is used, no depolymerization occurs. That is, when swelling pretreatment is carried out according to example embodiments of the present disclosure, swelling occurs without decomposition through depolymerization, thereby increasing the interstitial spaces in the strongly pressurized cured thermosetting resin material and thereby increasing the decomposition reactive surface during decomposition after the pretreatment. In this manner, it is possible to facilitate decomposition.

Therefore, in example embodiments, the swelled cured thermosetting resin material which will be subject to decomposition, in particular depolymerization has an increased volume without depolymerization, as compared to the same cured thermosetting resin material before swelling pretreatment.

Hereinafter, the present disclosure will be described in detail through examples. However, the following examples are for illustrative purposes only and it will be apparent to those of ordinary skill in the art that the scope of the present disclosure is not limited by the examples.

**[Experiment 1]**

In Examples 1-3, the amount of a surfactant contained in each pretreatment composition is controlled. In Examples 1, 4, 5, 6 and 7, the type of a surfactant contained in each pretreatment composition is controlled. Comparative Example 1 includes no surfactant in the pretreatment composition, and Comparative Example 2 includes no acidic material in the pretreatment composition.

Meanwhile, in Examples 8, 9 and 10, the same pretreatment composition as Example 4 that is the most effective, among the pretreatment compositions of Examples 1, 4, 5, 6, 7, for increasing the decomposition ratio is used but depolymerization is carried out not by chemical depolymerization but by pyrolysis. In Examples 8, 9 and 10, the amount of a surfactant is controlled. In Comparative Example 3, CFRP is subjected to pyrolysis without any pretreatment process. In Comparative Example 4, pretreatment is carried out by using a pretreatment composition including no acidic material, and then CFRP is subjected to pyrolysis .

**[Example 1: Depolymerization of Cured Epoxy Resin Material after Pretreatment of CFRP Using Acetic Acid Mixed with 9.4 wt% of Sodium Dodecyl Sulfate (SDS, Anionic Surfactant) and Separation of Filler (Carbon Fibers)]**

The cured epoxy resin material used in Example 1 is a waste CFRP. The waste CFRP includes a cured epoxy resin material obtained by using a bisphenol A diglycidyl ether type epoxy compound containing a halogen atom and an aromatic curing agent containing an aromatic amine group, and carbon fibers. Such CFRP uses an aromatic curing agent, and thus it is known that such CFRP has relatively high difficulty in decomposition.

1.5 g of the waste CFRP is introduced to a composition containing 1.0 g of SDS mixed with 100 mL of 99% acetic acid and heated at 120°C for 24 hours. Then, the cured epoxy resin material is separated, washed with 20 mL of acetone and dried.

Then, 0.1 g of the dried CFRP is introduced to 70 mL of a composition for decomposition of a cured epoxy resin material including 4 mol/L aqueous sodium hypochlorite solution and contained in an open glass container, and agitated at 70°C for 24 hours to carry out depolymerization. No autoclave is used.

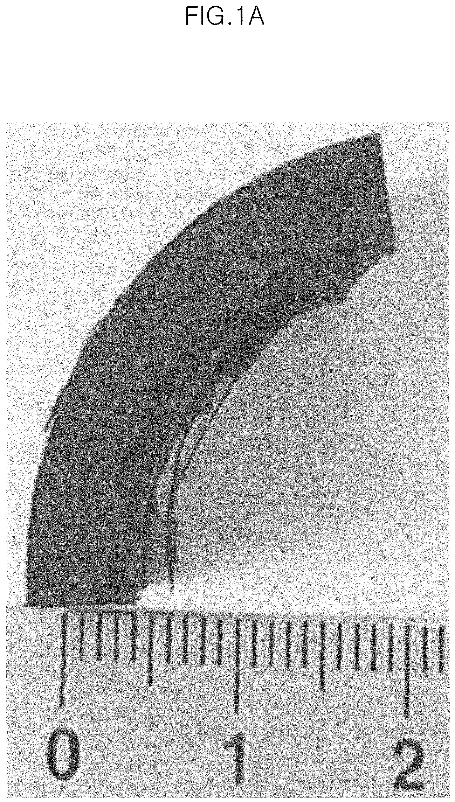

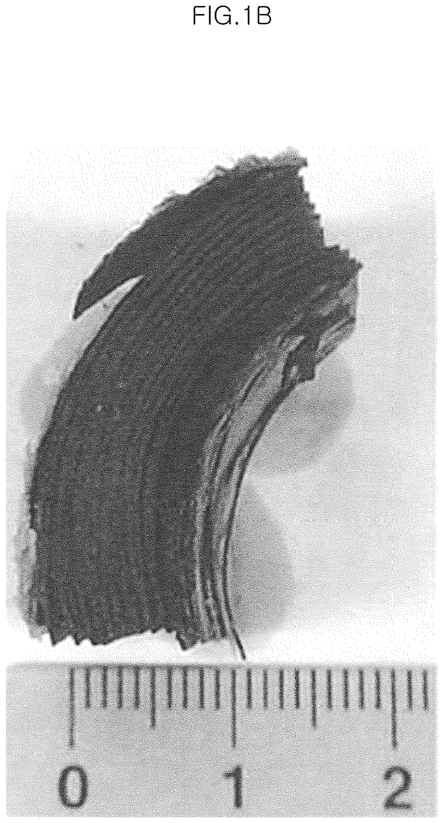

FIG. 1A is a photograph illustrating a CFRP before pretreatment in Example 1 and FIG. 1B is a photograph illustrating a CFRP after pretreatment in Example 1.

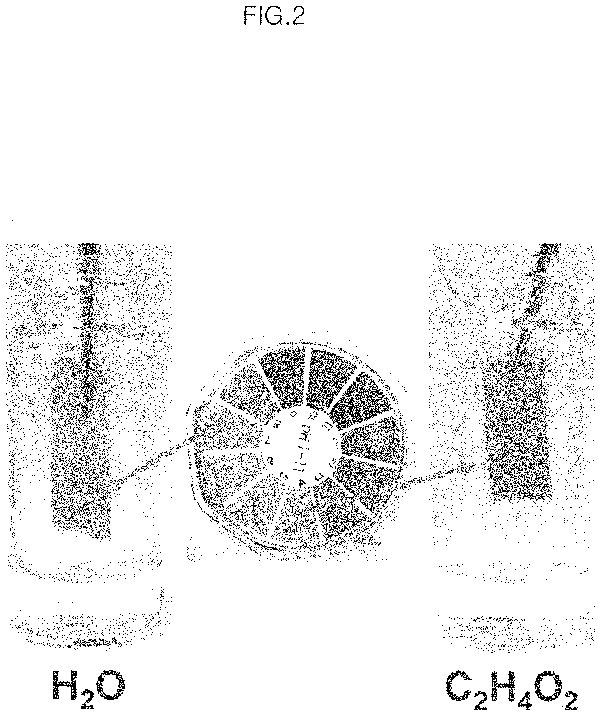

FIG. 2 shows the results of measurement of pH for the composition for pretreatment in Example 1.

As shown in FIGS. 1A and 1B, it can be seen that swelling of CFRP occurs. It can be also seen that no depolymerization (decomposition) occurs.

After carrying out depolymerization for 24 hours, the carbon fibers in aqueous solution are filtered using cellulose filtering paper available from Advantec Company, and the carbon fibers are separated, washed and dried. The dried carbon fibers are subjected to thermogravimetric analysis (TGA) to determine a depolymerization ratio (decomposition ratio) for the cured epoxy resin material.

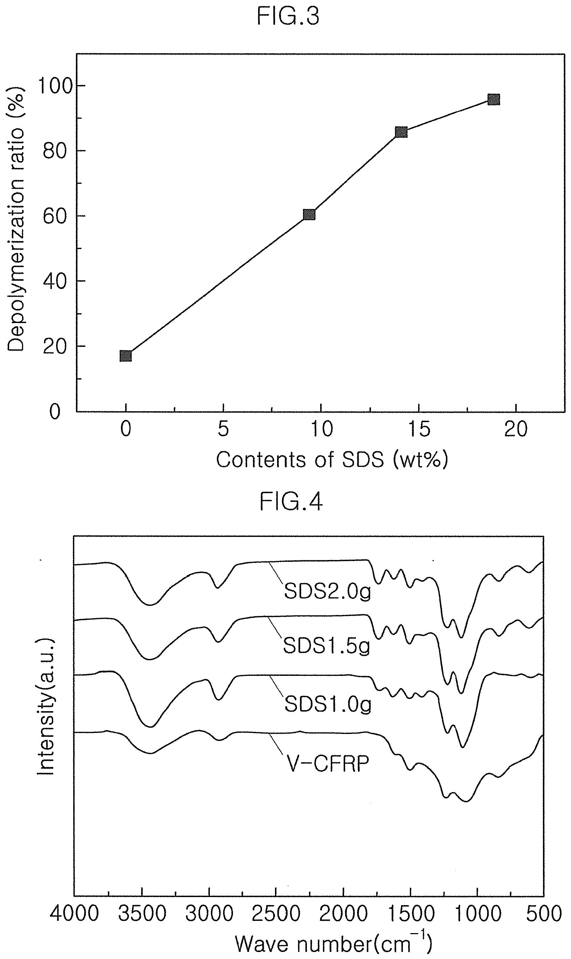

The depolymerization ratio (decomposition ratio) after carrying out depolymerization of the cured epoxy resin material for 24 hours is shown in Table 1 and FIG. 3.

In addition, in order to determine a change in chemical properties of CFRP caused by infiltration of acetic acid after the pretreatment in Example 1, FT-IR analysis is carried out for CFRP before pretreatment (denoted as V-CFRP in FIG. 4) and CFRP after pretreatment (in the case of Example 1, denoted as SDS 1.0 g in FIG. 4), and the results are shown in FIG. 4.

For FT-IR analysis, Nicolet iS 10 instrument available from ThermoScientific Company is used, and pellets are formed by using the solid mixture and potassium bromide and a wavenumber range of 500 $cm^{-1}$ to 4000 $cm^{-1}$ is measured. It can be seen from the results of FT-IR that the intensity increases and particularly C=O bonding is produced.

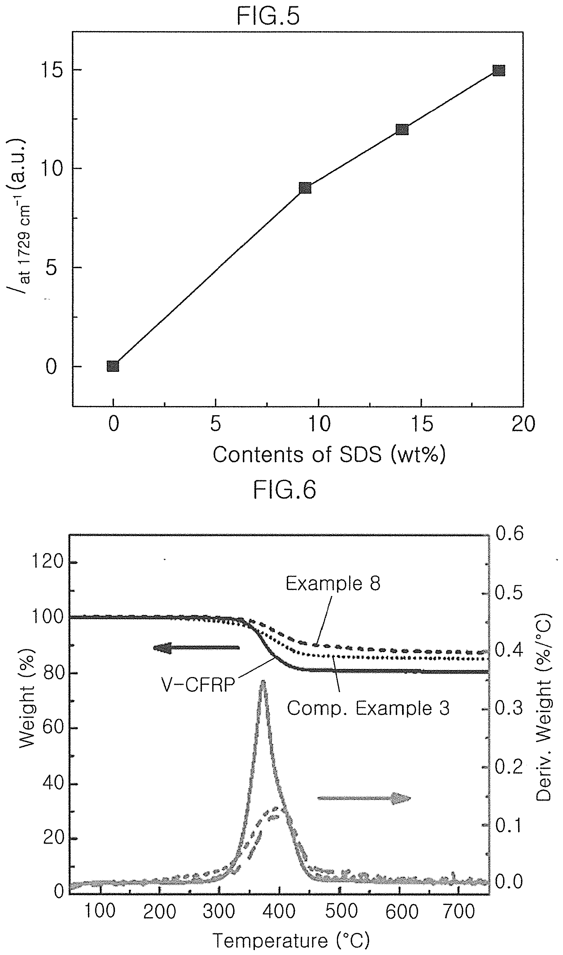

Based on the FT-IR data in FIG. 4, the intensity of CFRP at a specific frequency (1729 $cm^{-1}$) is shown in FIG. 5 as a function of the amount of a surfactant in order to demonstrate that an increase in amount of a surfactant results in an increase in C=O bonds.

As can be seen from FIG. 5, when using a surfactant, an increase in amount of a surfactant results in more occurrence of C=O bonding.

**[Example 2: Depolymerization of Cured Epoxy Resin Material after Pretreatment of CFRP Using Acetic Acid Mixed with 14.1 wt% of Sodium Dodecyl Sulfate (SDS) and Separation of Filler (Carbon Fibers)]**

1.5 g of the same CFRP as used in Example 1 is introduced to a composition containing 1.5 g of SDS mixed with 100 mL of 99% acetic acid and heated at 120°C for 24 hours. Then, the cured epoxy resin material is separated, washed with 20 mL of acetone and dried.

Then, 0.1 g of the dried CFRP is introduced to 70 mL of the same composition for decomposition of a cured epoxy resin material as Example 1 contained in an open glass container, and agitated at 70°C for 24 hours to carry out depolymerization. No autoclave is used.

After carrying out depolymerization for 24 hours, the carbon fibers in aqueous solution are filtered using cellulose filtering paper available from Advantec Company, and the carbon fibers are separated, washed and dried. The dried carbon fibers are subjected to thermogravimetric analysis (TGA) to determine a depolymerization ratio (decomposition ratio) for the cured epoxy resin material.

The depolymerization ratio (decomposition ratio) after carrying out depolymerization of the cured epoxy resin material for 24 hours is shown in Table 1 and FIG. 3. In addition, the results of FT-IR analysis for the CFRP after the pretreatment in Example 2 (in the case of Example 2, denoted as SDS 1.5 g in FIG. 4) are shown in FIG. 4.

In addition, in order to determine an increase in C=O bonding of CFRP caused by an increase in amount of a surfactant after the pretreatment in Example 2, the intensity of CFRP at a specific frequency (1729 cm$^{-1}$) is shown in FIG. 5. As can be seen from the results, when using an increased amount of surfactant, C=O bonding further increases.

**[Example 3: Depolymerization of Cured Epoxy Resin Material after Pretreatment of CFRP Using Acetic Acid Mixed with 18.8 wt% of Sodium Dodecyl Sulfate (SDS) and Separation of Filler (Carbon Fibers)]**

1.5 g of the same CFRP as used in Example 1 is introduced to a composition containing 2.0 g of SDS mixed with 100 mL of 99% acetic acid and heated at 120°C for 24 hours. Then, the cured epoxy resin material is separated, washed with 20 mL of acetone and dried.

Then, 0.1 g of the dried CFRP is introduced to 70 mL of the same composition for decomposition of a cured epoxy resin material as Example 1 contained in an open glass container, and agitated at 70°C for 24 hours to carry out depolymerization. No autoclave is used.

After carrying out depolymerization for 24 hours, the carbon fibers in aqueous solution are filtered using cellulose filtering paper available from Advantec Company, and the carbon fibers are separated, washed and dried. The dried carbon fibers are subjected to thermogravimetric analysis (TGA) to determine a depolymerization ratio (decomposition ratio) for the cured epoxy resin material.

The depolymerization ratio (decomposition ratio) after carrying out depolymerization of the cured epoxy resin material for 24 hours is shown in Table 1 and FIG. 3. In addition, the results of FT-IR analysis for the CFRP after the pretreatment in Example 3 (in the case of Example 3, denoted as SDS 2.0 g in FIG. 4) are shown in FIG. 4.

In addition, in order to determine an increase in C=O bonding of CFRP caused by an increase in amount of a surfactant after the pretreatment in Example 3, the intensity of CFRP at a specific frequency (1729 cm$^{-1}$) is shown in FIG. 5. As can be seen from the results, when using an increased amount of surfactant, C=O bonding further increases.

**[Example 4: Depolymerization of Cured Epoxy Resin Material after Pretreatment of CFRP Using Acetic Acid Mixed with 9.4 wt% of Benzyl Trimethyl Ammonium Bromide (BTAB, Cationic Surfactant) and Separation of Filler (Carbon Fibers)]**

1.5 g of the same CFRP as used in Example 1 is introduced to a composition containing 1.0 g of BTAB, a cationic surfactant, mixed with 100 mL of 99% acetic acid and heated at 120°C for 24 hours. Then, the cured epoxy resin material is separated, washed with 20 mL of acetone and dried.

Then, 0.1 g of the dried CFRP is introduced to 70 mL of the same composition for decomposition of a cured epoxy resin material as Example 1 contained in an open glass container, and agitated at 70°C for 24 hours to carry out depolymerization. No autoclave is used.

After carrying out depolymerization for 24 hours, the carbon fibers in aqueous solution are filtered using cellulose filtering paper available from Advantec Company, and the carbon fibers are separated, washed and dried. The dried carbon fibers are subjected to thermogravimetric analysis (TGA) to determine a depolymerization ratio (decomposition ratio) for the cured epoxy resin material.

The depolymerization ratio (decomposition ratio) after carrying out depolymerization of the cured epoxy resin material for 24 hours is shown in Table 1.

**[Example 5: Depolymerization of Cured Epoxy Resin Material after Pretreatment of CFRP Using Acetic Acid Mixed with 9.4 wt% of Cocobetaine (Amphoteric Surfactant) and Separation of Filler (Carbon Fibers)]**

1.5 g of the same CFRP as used in Example 1 is introduced to a composition containing 1.0 g of cocobetaine, an amphoteric surfactant, mixed with 100 mL of 99% acetic acid and heated at 120°C for 24 hours. Then, the cured epoxy resin material is separated, washed with 20 mL of acetone and dried.

Then, 0.1 g of the dried CFRP is introduced to 70 mL of the same composition for decomposition of a cured epoxy resin material as Example 1 contained in an open glass container, and agitated at 70°C for 24 hours to carry out depolymerization. No autoclave is used.

After carrying out depolymerization for 24 hours, the carbon fibers in aqueous solution are filtered using cellulose filtering paper available from Advantec Company, and the carbon fibers are separated, washed and dried. The dried carbon fibers are subjected to thermogravimetric analysis (TGA) to determine a depolymerization ratio (decomposition ratio) for the cured epoxy resin material.

The depolymerization ratio (decomposition ratio) after carrying out depolymerization of the cured epoxy resin material for 24 hours is shown in Table 1.

**[Example 6: Depolymerization of Cured Epoxy Resin Material after Pretreatment of CFRP Using Acetic Acid Mixed with 9.4 wt% of Polyoxyethylene Lauryl Ether (Brij 30, Nonionic Surfactant) and Separation of Filler (Carbon Fibers)]**

1.5 g of the same CFRP as used in Example 1 is introduced to a composition containing 1.0 g of Brij 30, a nonionic surfactant available from Sigma-Aldrich, USA, mixed with 100 mL of 99% acetic acid and heated at 120°C for 24 hours. Then, the cured epoxy resin material is separated, washed with 20 mL of acetone and dried.

Then, 0.1 g of the dried CFRP is introduced to 70 mL of the same composition for decomposition of a cured epoxy resin material as Example 1 contained in an open glass container, and agitated at 70°C for 24 hours to carry out depolymerization. No autoclave is used.

After carrying out depolymerization for 24 hours, the carbon fibers in aqueous solution are filtered using cellulose filtering paper available from Advantec Company, and the carbon fibers are separated, washed and dried. The dried carbon fibers are subjected to thermogravimetric analysis (TGA) to determine a depolymerization ratio (decomposition ratio) for the cured epoxy resin material.

The depolymerization ratio (decomposition ratio) after carrying out depolymerization of the cured epoxy resin material for 24 hours is shown in Table 1.

**[Example 7: Depolymerization of Cured Epoxy Resin Material after Pretreatment of CFRP Using Acetic Acid Mixed with 9.4 wt% of Fluorine-Based Surfactant (FC-4430, Special Surfactant) and Separation of Filler (Carbon Fibers)]**

1.5 g of the same CFRP as used in Example 1 is introduced to a composition containing 1.0 g of FC-4430, a special surfactant available from 3M Company, USA, mixed with 100 mL of 99% acetic acid and heated at 120°C for 24 hours. Then, the cured epoxy resin material is separated, washed with 20 mL of acetone and dried.

Then, 0.1 g of the dried CFRP is introduced to 70 mL of the same composition for decomposition of a cured epoxy resin material as Example 1 contained in an open glass container, and agitated at 70°C for 24 hours to carry out depolymerization. No autoclave is used.

After carrying out depolymerization for 24 hours, the carbon fibers in aqueous solution are filtered using cellulose filtering paper available from Advantec Company, and the carbon fibers are separated, washed and dried. The dried carbon fibers are subjected to thermogravimetric analysis (TGA) to determine a depolymerization ratio (decomposition ratio) for the cured epoxy resin material.

The depolymerization ratio (decomposition ratio) after carrying out depolymerization of the cured epoxy resin material for 24 hours is shown in Table 1.

**[Example 8: Pyrolysis of Cured Epoxy Resin Material after Pretreatment of CFRP Using Acetic Acid Mixed with 9.4 wt% of Benzyl Trimethyl Ammonium Bromide (BTAB, Cationic Surfactant) and Separation of Filler (Carbon Fibers)]**

1.5 g of the same CFRP as used in Example 1 is introduced to a composition containing 1.0 g of BTAB, a cationic surfactant, mixed with 100 mL of 99% acetic acid and heated at 120°C for 24 hours. Then, the cured epoxy resin material is separated, washed with 20 mL of acetone and dried.

Then, 0.1 g of the dried CFRP is introduced to an electric furnace and heated to 300°C at a heating rate of 10°C /min., and then the temperature is maintained for 20 minutes to carry out pyrolysis.

After carrying out pyrolysis for 20 minutes, the carbon fibers are removed, washed and dried. The dried carbon fibers are subjected to thermogravimetric analysis (TGA) to determine a pyrolysis ratio for the cured epoxy resin material.

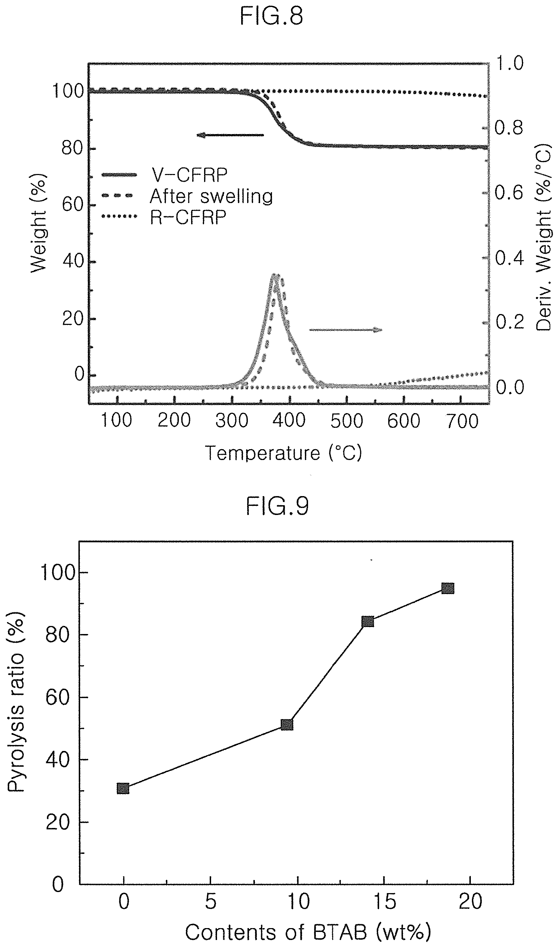

The pyrolysis ratio after carrying out pyrolysis of the cured epoxy resin material for 20 minutes is shown in Table 2 and FIG. 9.

**[Example 9: Pyrolysis of Cured Epoxy Resin Material after Pretreatment of CFRP Using Acetic Acid Mixed with 14.1 wt% of Benzyl Trimethyl Ammonium Bromide (BTAB, Cationic Surfactant) and Separation of Filler (Carbon Fibers)]**

1.5 g of the same CFRP as used in Example 1 is introduced to a composition containing 1.5 g of BTAB mixed with 100 mL of 99% acetic acid and heated at 120°C for 24 hours. Then, the cured epoxy resin material is separated, washed with 20 mL of acetone and dried.

Then, 0.1 g of the dried CFRP is introduced to an electric furnace and heated to 300°C at a heating rate of 10°C /min., and then the temperature is maintained for 20 minutes to carry out pyrolysis.

After carrying out pyrolysis for 20 minutes, the carbon fibers are removed, washed and dried. The dried carbon fibers are subjected to thermogravimetric analysis (TGA) to determine a pyrolysis ratio for the cured epoxy resin material.

The pyrolysis ratio after carrying out pyrolysis of the cured epoxy resin material for 20 minutes is shown in Table 2 and FIG. 9.

**[Example 10: Pyrolysis of Cured Epoxy Resin Material after Pretreatment of CFRP Using Acetic Acid Mixed with 18.8 wt% of Benzyl Trimethyl Ammonium Bromide (BTAB, Cationic Surfactant) and Separation of Filler (Carbon Fibers)]**

1.5 g of the same CFRP as used in Example 1 is introduced to a composition containing 2.0 g of BTAB, a cationic surfactant, mixed with 100 mL of 99% acetic acid and heated at 120°C for 24 hours. Then, the cured epoxy resin material is separated, washed with 20 mL of acetone and dried.

Then, 0.1 g of the dried CFRP is introduced to an electric furnace and heated to 300°C at a heating rate of 10°C /min., and then the temperature is maintained for 20 minutes to carry out pyrolysis.

After carrying out pyrolysis for 20 minutes, the carbon fibers are removed, washed and dried. The dried carbon fibers are subjected to thermogravimetric analysis (TGA) to determine a pyrolysis ratio for the cured epoxy resin material.

The pyrolysis ratio after carrying out pyrolysis of the cured epoxy resin material for 20 minutes is shown in Table 2 and FIG. 9.

**[Comparative Example 1: Depolymerization of Cured Epoxy Resin Material after Pretreatment of CFRP Using Acetic Acid Not Mixed with Surfactant and Separation of Filler (Carbon Fibers)]**

1.5 g of the same CFRP as used in Example 1 is introduced to 100 mL of 99% acetic acid and heated at 120°C for 24 hours. Then, the cured epoxy resin material is separated, washed with 20 mL of acetone and dried.

Then, 0.1 g of the dried CFRP is introduced to 70 mL of the same composition for decomposition of a cured epoxy resin material as Example 1 contained in an open glass container, and agitated at 70°C for 24 hours to carry out depolymerization. No autoclave is used.

After carrying out depolymerization for 24 hours, the carbon fibers in aqueous solution are filtered using cellulose filtering paper available from Advantec Company, and the carbon fibers are separated, washed and dried. The dried carbon fibers are subjected to thermogravimetric analysis (TGA) to determine a depolymerization ratio (decomposition ratio) for the cured epoxy resin material.

The depolymerization ratio (decomposition ratio) after carrying out depolymerization of the cured epoxy resin material for 24 hours is shown in Table 1 and FIG. 3.

FIG. 3 is a graph illustrating the results of depolymerization ratio (decomposition ratio) after 24 hours as a function of the amount of surfactant in each of the compositions for swelling pretreatment obtained from Examples 1-3 and Comparative Example 1.

In Comparative Example 1, it is thought that since there is no acceleration of infiltration of acetic acid by virtue of surfactant, which in turn leads to a decrease of pretreatment efficiency, and as a result, the depolymerization ratio (decomposition ratio) is lower as compared to Examples.

**[Comparative Example 2: Depolymerization of Cured Epoxy Resin Material after Pretreatment of CFRP Using Aqueous 9.4wt% Sodium Dodecyl Sulfate (SDS) Solution and Separation of Filler (Carbon Fibers)]**

1.5 g of the same CFRP as used in Example 1 is introduced to a solution containing 1.5 g of SDS and 100 mL of water and heated at 120°C for 24 hours. Then, the cured epoxy resin material is separated, washed with 20 mL of acetone and dried.

Then, 0.1 g of the dried CFRP is introduced to 70 mL of the same composition for decomposition of a cured epoxy resin material as Example 1 contained in an open glass container, and agitated at 70°C for 24 hours to carry out depolymerization. No autoclave is used.

After carrying out depolymerization for 24 hours, the carbon fibers in aqueous solution are filtered using cellulose filtering paper available from Advantec Company, and the carbon fibers are separated, washed and dried. The dried carbon fibers are subjected to thermogravimetric analysis (TGA) to determine a depolymerization ratio (decomposition ratio) for the cured epoxy resin material.

The depolymerization ratio (decomposition ratio) after carrying out depolymerization of the cured epoxy resin material for 24 hours is shown in Table 1.

In Comparative Example 2, it is thought that since the composition lacks the acidic material, swelling caused by infiltration is lowered, which in turn lowers pretreatment efficiency, and as a result, the depolymerization ratio (decomposition ratio) is lower as compared to Examples.

**[Comparative Example 3: Pyrolysis of Cured Epoxy Resin Material Not Subjected to Pretreatment and Separation of Filler (Carbon Fibers)]**

1.5 g of the same CFRP as used in Example 1 is used but no pretreatment is carried out. The CFRP is introduced to an electric furnace and heated to 300°C at a heating rate of 10°C /min., and then the temperature is maintained for 20 minutes to carry out pyrolysis.

After carrying out pyrolysis for 20 minutes, the carbon fibers are removed, washed and dried. The dried carbon fibers are subjected to thermogravimetric analysis (TGA) to determine a pyrolysis ratio (decomposition ratio) for the cured epoxy resin material.

The pyrolysis ratio (decomposition ratio) after carrying out pyrolysis of the cured epoxy resin material for 20 minutes is shown in Table 2.

**[Comparative Example 4: Pyrolysis of Cured Epoxy Resin Material after Pretreatment Using Aqueous 9.4wt% Benzyl Trimethyl Ammonium Bromide (BTAB, Cationic Surfactant) Solution and Separation of Filler (Carbon Fibers)]**

1.5 g of the same CFRP as used in Example 1 is introduced to a solution containing 1.5 g of BTAB mixed with 100 mL of water and heated at 120°C for 24 hours. Then, the cured epoxy resin material is separated, washed with 20 mL of acetone and dried.

Then, the dried CFRP is introduced to an electric furnace and heated to 300°C at a heating rate of 10°C /min., and then the temperature is maintained for 20 minutes to carry out pyrolysis.

After carrying out pyrolysis for 20 minutes, the carbon fibers are removed, washed and dried. The dried carbon fibers are subjected to thermogravimetric analysis (TGA) to determine a pyrolysis ratio for the cured epoxy resin material.

The pyrolysis ratio after carrying out pyrolysis of the cured epoxy resin material for 20 minutes is shown in Table 2.

Similarly to Comparative Example 2, in Comparative Example 4 as well, it is thought that since the composition lacks the acidic material, swelling caused by infiltration is lowered, which in turn lowers pretreatment efficiency, and as a result, the depolymerization ratio (decomposition ratio) is lower as compared to Example 8.

**[Experiment Results for Decomposition of Epoxy Resin According to Examples and Comparative Examples and Characteristics of Recovered Fillers]**

Table 1 shows the results of the depolymerization ratio (decomposition ratio) for the cured epoxy resin material after carrying out depolymerization for 24 hours according to each of Examples 1-7 and Comparative Examples 1 and 2. In addition, Table 2 shows the results of the pyrolysis ratio (decomposition ratio) for the cured epoxy resin material after carrying out pyrolysis for 20 minutes according to each of Examples 8-10 and Comparative Examples 3 and 4.

[Table 1]

| Examples | Surfactant (Amount [wt%]) | Acidic Material | Decomposition Ratio after Carrying out Depolymerization for 24 hours [%] |
|---|---|---|---|
| Example 1 | SDS (9.4) | Acetic acid | 60.7 |
| Example 2 | SDS (14.1) | Acetic acid | 86.1 |
| Example 3 | SDS (18.8) | Acetic acid | 96.2 |
| Example 4 | BTAB (9.4) | Acetic acid | 62.5 |
| Example 5 | Cocobetaine (9.4) | Acetic acid | 58.6 |
| Example 6 | Brij 30 (9.4) | Acetic acid | 55.1 |
| Example 7 | FC-4430 (9.4) | Acetic acid | 54.9 |
| Comp. Ex. 1 | - | Acetic acid | 17.2 |
| Comp. Ex. 2 | SDS (9.4) | - (Water) | 1.7 |

For reference, no additional water is used in Examples 1-7 and Comparative Example 1, besides the surfactant and the acetic acid. This is in contrast with the use of aqueous solution as a composition for depolymerization during the subsequent depolymerization.

[Table 2]

| Examples | Surfactant (Amount [wt%]) | Acidic material | Decomposition Ratio after Carrying out Pyrolysis for 20 Minutes [%] |
|---|---|---|---|
| Example 8 | BTAB (9.4) | Acetic acid | 51.2 |
| Example 9 | BTAB (14.1) | Acetic acid | 84.3 |
| Example 10 | BTAB (18.8) | Acetic acid | 94.8 |
| Comp. Ex. 3 | - | - | 30.8 |
| Comp. Ex. 4 | BTAB (9.4) | - | 31.4 |

As can be seen from the results of Examples 1-7 and Comparative Example 1 in Table 1, Examples using a surfactant show a relatively higher depolymerization ratio after the same period of time.

Meanwhile, it is demonstrated from the results of Table 2, FIG. 6 and FIG. 9 that pretreatment using a surfactant provides an increased decomposition ratio not only in the case of chemical depolymerization but also in the case of pyrolysis.

FIG. 6 is a thermogravimetric analysis (TGA) graph before and after the pyrolysis in Example 8 and Comparative Example 3.

It can be seen from the results of decomposition ratios of Example 8 and Comparative Example 3 in Table 2 calculated from the TGA results that pretreatment using a surfactant increases a decomposition ratio after the same period of time by at least 20% not only in chemical depolymerization but also in pyrolysis.

FIG. 9 is a graph illustrating the results of a decomposition ratio of pyrolysis after 24 hours as a function of the amount of surfactant in each of the compositions for swelling pretreatment obtained from Examples 8-10 and Comparative Example 3.

As can be seen from FIG. 9, as the amount of a surfactant increases, the pyrolysis ratio also increases.

It is thought that this is because addition of a surfactant allows acetic acid which is an acidic material to infiltrate into the cured epoxy resin material with ease, and thus the swelling effect of the cured epoxy resin material provided by the acetic acid is increased and the heat contact area or depolymerization reactive surface area is increased during the subsequent pyrolysis or depolymerization. It is also thought that such an effect of increasing a decomposition ratio may reduce a processing time and cost and energy requirement for decomposition and decrease a degradation of filler properties that may occur during decomposition.

Meanwhile, as described above, FT-IR analysis is carried out for CFRP before pretreatment (denoted as V-CFRP) and for CFRP after pretreatment according to Examples 1-3 in order to determine the effect of a surfactant more clearly. The results are shown in FIG. 4 and FIG. 5. As can be seen from the results of FIG. 4 and FIG. 5, the intensity of the peak representing C=O bonding ($cm^{-1}$) produced by infiltration of acetic acid and swelling as compared to the

peak (cm$^{-1}$) representing the cured epoxy resin material in CFRP increases in proportion to the amount of a surfactant.

In addition, as can be seen from Comparative Example 2 in Table 1 and Comparative Example 4 in Table 2, use of a pretreatment composition that includes a surfactant but includes no acidic material provides a very low decomposition ratio after the same period of time. It is thought that an acidic material donates proton more easily than water, and thus forms covalent, ionic or hydrogen bonding with the cured epoxy resin material relatively easily.

As can be seen from the foregoing, when carrying out swelling pretreatment of a cured thermosetting resin material by using the swelling pretreatment composition before decomposition according to example embodiments of the present disclosure, it is possible to accelerate infiltration of an acidic material into the cured thermosetting resin material by virtue of a surfactant and to that end the swelling of the cured thermosetting resin material, so that the decomposition reactive surface area may be increased. In this manner, it is possible to increase decomposition efficiency. For example, it is possible to increase the decomposition ratio after the same period of time by at least 10%, particularly at least 20%, more particularly at least 50%, and even more particularly at least 100%. As a result, it is possible to reduce the time, cost and energy consumption required for decomposition, and to minimize degradation of filler properties that may occur during decomposition.

**[Experiment 2]**

In Experiment 2, it is shown that the pretreatment according to example embodiments of the present disclosure does not cause depolymerization but increases decomposition reactive surface area through swelling.

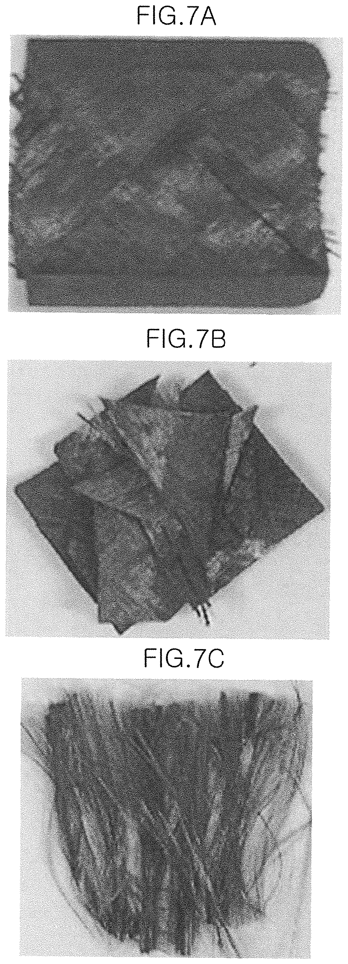

FIG. 7A shows a photograph of Example 1 before pretreatment, FIG. 7B shows a photograph of Example 1 after pretreatment, and FIG. 7C shows a photograph of Example 1 after decomposition.

As shown in FIGS. 7A-7C, in case of the composite before pretreatment, its carbon fibers piled up neatly are not separated due to high pressure and curing. However, after pretreatment, the carbon fibers are separated layer by layer as like sheets. In addition, after decomposition, the pretreated sheet-like carbon fibers in CFRP are recovered in the form of fibers.

Thus, when carrying out pretreatment by using the pretreatment composition as disclosed herein, swelling occurs without decomposition through depolymerization, and thus the highly pressurized composite of cured thermosetting resin material has an increased interstices and increased decomposition reactive surface area, thereby facilitating decomposition.

Then, thermogravimetric analysis is carried out to determine whether depolymerization occurs during pretreatment or not.

FIG. 8 is a thermogravimetric analysis (TGA) graph of Example 1 before pretreatment and after pretreatment and after decomposition. Herein, TA Q50 instrument available from TA Instrument (USA) is used as thermogravimetric analyzer.

As can be seen from FIG. 8, in the case of CFRP before pretreatment (denoted as V-CFRP), decomposition of epoxy resin occurs nearly at 350°C. Considering a drop in weight at the point, it can be seen that epoxy resins are contained in an amount of about 20% based on the total weight of CFRP. Meanwhile, in the case of the sample of Example 1 subjected to swelling pretreatment with a surfactant and acetic acid (denoted as after swelling), decomposition of epoxy resin occurs nearly at 350°C, like CFRP before pretreatment (V-CFRP). Considering a drop in weight at the point, it can be seen that epoxy resins are contained in an amount of about 20%. Therefore, it can be seen that epoxy resins are not decomposed by swelling pretreatment but are maintained.

By contrast, in the case of CFRP subjected to depolymerization (denoted as R-CFRP), any drop in weight is not observed nearly at 350°C. Thus, it can be seen that epoxy resins are decomposed completely leaving no residue.

**Claims**

1. A use of a composition comprising a surfactant and an acidic material, wherein the composition is used for swelling pretreatment of a cured thermosetting resin material such as a cured epoxy resin material before decomposition such as pyrolysis or decpolymerization, wherein the surfactant is at least one selected from the group consisting of anionic surfactant, cationic surfactant, amphoteric surfactant, nonionic surfactant and special surfactant.

2. The use of claim 1, wherein the anionic surfactant comprises at least one selected from the group consisting of fatty acid salt, sulfate, sulfonate and phosphate, and/or

   wherein the cationic surfactant comprises at least one selected from the group consisting of amine salt, ammonium salt and pyridinium salt, and/or
   wherein the amphoteric surfactant comprises at least one selected from the group consisting of amino acid salt, betaine-based compound and natural surfactant, and
wherein the nonionic surfactant comprises at least one selected from the group consisting of polyhydric alcohol-based compound, adduct of polyhydric alkyl phenol with ethylene oxide, fatty acid ester-based compound, adduct of polyhydric alcohol with ethylene oxide and adduct of polyhydric alcohol with propylene oxide, and/or
wherein the special surfactant comprises at least one selected from the group consisting of fluoro-compound, silicon compound, polyacrylamide polymer and polymethacrylate polymer, and
wherein the acidic material is at least one selected from the group consisting of acetic acid, propionic acid and butyric acid.

3. The use according to any of claims 1 to 2, wherein the surfactant is used in an amount of 1-99 wt% based on the total weight of the pretreatment composition.

4. The use according to any of claims 1 to 3, wherein the composition has a pH of 1 or higher and less than 7.

5. A method for swelling pretreatment of a cured thermosetting resin material such as a cured epoxy resin material before decomposition such as pyrolysis or depolymerization comprising carrying out swelling of the cured thermosetting resin material by using the composition for swelling pretreatment as defined in any of claims 1 to 4,
wherein the method comprises dipping the cured thermosetting resin material in the composition for swelling pretreatment, before the cured thermosetting resin material is decomposed, thereby accelerating infiltration of the acidic material and swelling of the cured thermosetting resin material.

6. The method for swelling pretreatment before decomposition of a cured thermosetting resin material according to claim 5, wherein the method comprises dipping the cured thermosetting resin material in the composition for swelling pretreatment, before the cured thermosetting resin material is decomposed, thereby increasing the decomposition reactive surface area.

7. The method for swelling pretreatment before decomposition of a cured thermosetting resin material according to any of claims 5 to 6, wherein the pretreatment is carried out at a temperature of 20-250°C, and/or
wherein the cured thermosetting resin material is used in an amount of 1-99 parts by weight based on 100 parts by weight of the total composition for swelling pretreatment.

8. The method for swelling pretreatment before decomposition of a cured thermosetting resin material according any of claims 5 to 7, wherein the method comprises adding a composition for swelling pretreatment remaining after dipping and separating the cured thermosetting resin material to swelling pretreatment of a new cured thermosetting resin material, so as that the composition is recycled.

9. The method for swelling pretreatment before decomposition of a cured thermosetting resin material according to any of claims 5 to 8, wherein the method further comprises carrying out physical crushing in combination with the swelling pretreatment, and optionally
wherein the physical crushing is at least one selected from dry crushing and wet crushing.

10. A cured thermosetting resin material to be decomposed, which is swelled with the composition for swelling pretreatment as defined in any of claims 1 to 4.


**Patentansprüche**

1. Verwendung einer Zusammensetzung, die ein Tensid und ein säurehaltiges Material umfasst, wobei die Zusammensetzung zur Quellungs-Vorbehandlung eines gehärteten duroplastischen Harzmaterials, wie zum Beispiel eines gehärteten Epoxidharzmaterials, vor einer Zersetzung, wie zum Beispiel einer Pyrolyse oder einer Depolymerisation, einsetzbar ist, wobei das Tensid mindestens ein aus der Gruppe bestehend aus anionischem Tensid, kationischem Tensid, amphoterem Tensid, nicht ionischem Tensid und speziellem Tensid ausgewähltes Tensid ist.

2. Verwendung nach Anspruch 1, wobei das anionische Tensid mindestens ein aus der Gruppe bestehend aus Fettsäuresalz, Sulfat, Sulfonat und Phosphat ausgewähltes anionisches Tensid umfasst und/oder

    wobei das kationische Tensid mindestens ein aus der Gruppe bestehend aus Aminsalz, Ammoniumsalz und Pyridiniumsalz ausgewähltes kationisches Tensid umfasst und/oder

wobei das amphotere Tensid mindestens ein aus der Gruppe bestehend aus Aminosäuresalz, Verbindung auf Betain-Basis und natürlichem Tensid ausgewähltes amphoteres Tensid umfasst und

wobei das nicht ionische Tensid mindestens ein aus der Gruppe bestehend aus Verbindung auf Basis mehrwertigen Alkohols, Addukt von mehrwertigem Alkylphenol mit Ethylenoxid, Verbindung auf Basis von Fettsäureester, Addukt von mehrwertigem Alkohol mit Ethylenoxid und Addukt von mehrwertigem Alkohol mit Propylenoxid ausgewähltes nicht ionisches Tensid umfasst und/oder

wobei das spezielle Tensid mindestens ein aus der Gruppe bestehend aus Fluorverbindung, Siliciumverbindung, Polyacrylamidpolymer und Polymethacrylatpolymer ausgewähltes spezielles Tensid umfasst und

wobei das säurehaltige Material mindestens ein aus der Gruppe bestehend aus Essigsäure, Propionsäure und Buttersäure ausgewähltes säurehaltiges Material ist.

3. Verwendung nach einem der Ansprüche 1 bis 2, wobei das Tensid bezogen auf das Gesamtgewicht der Vorbehandlungszusammensetzung mit einem Anteil von 1 bis 99 Gew.-% eingesetzt wird.

4. Verwendung nach einem der Ansprüche 1 bis 3, wobei die Zusammensetzung einen pH-Wert von 1 oder höher und weniger als 7 aufweist.

5. Verfahren zur Quellungs-Vorbehandlung eines gehärteten duroplastischen Harzmaterials, wie zum Beispiel eines gehärteten Epoxidharzmaterials, vor einer Zersetzung, wie zum Beispiel einer Pyrolyse oder einer Depolymerisation, umfassend das Durchführen einer Quellung des gehärteten duroplastischen Harzmaterials unter Verwendung der Zusammensetzung zur Quellungs-Vorbehandlung nach einem der Ansprüche 1 bis 4,

wobei das Verfahren ein Eintauchen des gehärteten duroplastischen Harzmaterials in die Zusammensetzung zur Quellungs-Vorbehandlung umfasst, bevor das gehärtete duroplastische Harzmaterial zersetzt wird, wodurch die Infiltration des säurehaltigen Materials und die Quellung des gehärteten duroplastischen Harzmaterials beschleunigt wird.

6. Verfahren zur Quellungs-Vorbehandlung vor einer Zersetzung eines gehärteten duroplastischen Harzmaterials nach Anspruch 5, wobei das Verfahren ein Eintauchen des gehärteten duroplastischen Harzmaterials in die Zusammensetzung zur Quellungs-Vorbehandlung umfasst, bevor das gehärtete duroplastische Harzmaterial zersetzt wird, wodurch die zersetzungsreaktive Oberfläche vergrößert wird.

7. Verfahren zur Quellungs-Vorbehandlung vor einer Zersetzung eines gehärteten duroplastischen Harzmaterials nach einem der Ansprüche 5 bis 6, wobei die Vorbehandlung bei einer Temperatur von 20 bis 250 °C durchgeführt wird und/oder wobei das gehärtete duroplastische Material bezogen auf 100 Gewichtsteile der Gesamtzusammensetzung zur Quellungs-Vorbehandlung mit einem Anteil von 1 bis 99 Gewichtsteilen eingesetzt wird.

8. Verfahren zur Quellungs-Vorbehandlung vor einer Zersetzung eines gehärteten duroplastischen Harzmaterials nach einem der Ansprüche 5 bis 7, wobei das Verfahren ein Hinzufügen einer nach dem Eintauchen und Trennen des gehärteten duroplastischen Harzmaterials verbleibenden Zusammensetzung zur Quellungs-Vorbehandlung zu einer Quellungs-Vorbehandlung eines neuen gehärteten duroplastischen Harzmaterials umfasst, so dass die Zusammensetzung wiederverwendet wird.

9. Verfahren zur Quellungs-Vorbehandlung vor einer Zersetzung eines gehärteten duroplastischen Harzmaterials nach einem der Ansprüche 5 bis 8, wobei das Verfahren des Weiteren ein Durchführen einer physikalischen Zerkleinerung in Kombination mit der Quellungs-Vorbehandlung umfasst und

wobei es sich bei der physikalischen Zerkleinerung wahlweise um eine Trockenzerkleinerung und/oder eine Nasszerkleinerung handelt.

10. Zu zersetzendes gehärtetes duroplastisches Harzmaterial, das mittels der Zusammensetzung zur Quellungs-Vorbehandlung nach einem der Ansprüche 1 bis 4 quellbar ist.

**Revendications**

1. Utilisation d'une composition comprenant un tensioactif et un matériau acide, dans laquelle la composition est utilisée pour un prétraitement de gonflement d'un matériau de résine thermodurcissable durcie tel qu'un matériau de résine époxy durcie avant une décomposition telle qu'une pyrolyse ou une dépolymérisation, dans laquelle le tensioactif est au moins un sélectionné dans le groupe consistant en tensioactif anionique, tensioactif cationique, tensioactif amphotère, tensioactif non ionique et tensioactif particulier.

2. Utilisation selon la revendication 1, dans laquelle le tensioactif anionique comprend au moins un sélectionné dans le groupe consistant en sel d'acide gras, sulfate, sulfonate et phosphate, et/ou

dans laquelle le tensioactif cationique comprend au moins un sélectionné dans le groupe consistant en sel d'amine, sel d'ammonium et sel de pyridinium, et/ou dans laquelle le tensioactif amphotère comprend au moins un sélectionné dans le groupe consistant en sel d'aminoacide, composé à base de bétaïne et tensioactif naturel, et

dans laquelle le tensioactif non ionique comprend au moins un sélectionné dans le groupe consistant en composé à base d'alcool polyvalent, adduit de phénol d'alkyl polyvalent avec de l'oxyde d'éthylène, composé à base d'ester d'acide gras, adduit d'alcool polyvalent avec de l'oxyde d'éthylène et adduit d'alcool polyvalent avec de l'oxyde de propylène, et/ou

dans laquelle le tensioactif particulier comprend au moins un sélectionné dans le groupe consistant en composé fluoré, composé de silicium, polymère de polyacrylamide et polymère de polyméthacrylate, et

dans laquelle le matériau acide est au moins un sélectionné dans le groupe consistant en acide acétique, acide propionique et acide butyrique.

3. Utilisation selon l'une quelconque des revendications 1 à 2, dans laquelle le tensioactif est utilisé en une quantité de 1 à 99 % en poids par rapport au poids total de la composition de prétraitement.

4. Utilisation selon l'une quelconque des revendications 1 à 3, dans laquelle la composition a un pH de 1 ou plus et inférieur à 7.

5. Procédé de prétraitement de gonflement d'un matériau de résine thermodurcissable durcie tel qu'un matériau de résine époxy durcie avant une décomposition telle qu'une pyrolyse ou une dépolymérisation, le procédé comprenant l'étape consistant à effectuer un gonflement du matériau de résine thermodurcissable durcie en utilisant la composition de prétraitement de gonflement selon l'une quelconque des revendications 1 à 4, dans lequel le procédé comprend l'étape consistant à immerger le matériau de résine thermodurcissable durcie dans la composition de prétraitement de gonflement avant que le matériau de résine thermodurcissable durcie soit décomposé, accélérant ainsi l'infiltration du matériau acide et le gonflement du matériau de résine thermodurcissable durcie.

6. Procédé de prétraitement de gonflement avant la décomposition d'un matériau de résine thermodurcissable durcie selon la revendication 5, dans lequel le procédé comprend l'étape consistant à immerger le matériau de résine thermodurcissable durcie dans la composition de prétraitement de gonflement avant que le matériau de résine thermodurcissable durcie soit décomposé, augmentant ainsi une aire de surface réactive à la décomposition.

7. Procédé de prétraitement de gonflement avant la décomposition d'un matériau de résine thermodurcissable durcie selon l'une quelconque des revendications 5 à 6, dans lequel le prétraitement est effectué à une température de 20 à 250 °C, et/ou dans lequel le matériau de résine thermodurcissable durcie est utilisé en une quantité de 1 à 99 parties en poids par rapport à 100 parties en poids de la composition de prétraitement de gonflement totale.

8. Procédé de prétraitement de gonflement avant la décomposition d'un matériau de résine thermodurcissable durcie selon l'une quelconque des revendications 5 à 7, dans lequel le procédé comprend l'étape consistant à ajouter une composition de prétraitement de gonflement restante après l'immersion et la séparation du matériau de résine thermodurcissable durcie au prétraitement de gonflement d'un nouveau matériau de résine thermodurcissable durcie de sorte que la composition est recyclée.

9. Procédé de prétraitement de gonflement avant la décomposition d'un matériau de résine thermodurcissable durcie selon l'une quelconque des revendications 5 à 8, dans lequel le procédé comprend en outre l'étape consistant à effectuer un broyage physique en combinaison avec le prétraitement de gonflement, et optionnellement dans lequel le broyage physique est au moins un sélectionné parmi le broyage sec et le broyage humide.

10. Matériau de résine thermodurcissable durcie à décomposer, qui est gonflé avec la composition de prétraitement de gonflement selon l'une quelconque des revendications 1 à 4.

## FIG.1A

## FIG.1B

FIG.2

H$_2$O   C$_2$H$_4$O$_2$

FIG.3

FIG.4

## FIG.5

## FIG.6

## FIG.7A

## FIG.7B

## FIG.7C

## FIG.8

## FIG.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015169801 A1

- US 6962628 B